# EUROPÄISCHE PATENTSCHRIFT

(11) **EP 0 607 578 B1**
(45) Veröffentlichungstag und Bekanntmachung des Hinweises auf die Patenterteilung: **20.08.1997**
(21) Anmeldenummer: 93120258.4
(22) Anmeldetag: 16.12.1993
(51) Int. Cl.: A01D 80/00, A01D 78/10

(54) **Kreiselheumaschine**
Rotary hay making machine
Machine rotative pour la fenaison

(30) Priorität: 16.01.1993 DE 4301084
(43) Veröffentlichungstag der Anmeldung: 27.07.1994
(73) Patentinhaber: CLAAS SAULGAU GMBH, D-88340 Saulgau (DE)
(72) Erfinder: Reber, Erwin, D-88348 Saulgau (DE); Jakobi, Wilhelm, D-88348 Saulgau-Bogenweiler (DE)

(56) Entgegenhaltungen:
- EP-A- 0 399 256
- EP-A- 0 439 067
- DE-A- 2 125 847

## Beschreibung

Die Erfindung bezieht sich auf eine Kreiselheumaschine nach dem Gattungsbegriff des Anspruches 1. Bei Maschinen dieser Art ist es bekannt, sowohl die Arbeitskreisel als auch deren verschwenkbare Fahrgestelle gemeinsam an Tragzapfen zu lagern, die schraubbar mit dem Maschinenrahmen verbunden sind.

Bei einer Ausführung, wie sie zum Beispiel aus der EP-OS 0465819 bekannt ist, ist über das freie Ende eines Tragzapfens eine Rohrhülse mit Spiel geschoben und sind auf dieser wieder die Wälzlager des Arbeitskreisels und eine weitere Rohrhülse, die einen Teil des Traggestelles für das Laufrad bildet, gelagert. Dadurch entsteht eine Anzahl von Fugen, die bei dem rauen Betrieb einer landwirtschaftlichen Maschine zu erhöhtem Verschleiß und unruhigem Lauf der rotierenden Teile führen kann. Außerdem besteht der Nachteil, daß ein Stellhebel aus einem seitlichen Schlitz im Maschinenrahmen herausgeführt werden muß, durch den Verunreinigungen eintreten und Schmiermittel austreten können.

Eine ähnliche Ausführung ist auch aus der EP-OS 0439 067, welche eine Kreiselheumaschine nach dem Gattungsbegriff des Anspruches 1 zeigt, bekannt. Hier sind als Rohrhülsen ausgebildete Tragzapfen für die Zinkenkreisel und die Stellwellen fest mit dem Maschinenrahmen verbunden und die Stellwellen so in den Rohrhülsen gelagert, daß sie unterhalb der Antriebswelle für die Zinkenkreisel enden und für eine Winkelverstellung der Laufräder mit einem Stellhebel seitlich aus dem Maschinenrahmen ragen. Der Ausbau der Kreisel ist mit einer solchen Ausführung nicht einfach und es besteht wie bei einer Gestaltung nach EP-OS 465 819 der Nachteil, daß durch die für die Stellhebel erforderlichen Schlitze im Maschinenrahmen Verunreinigungen eintreten und Schmiermittel austreten können.

Mit der Erfindung sollen diese Nachteile vermieden und eine besonders steife konstruktion mit geringem Bauaufwand ermöglicht werden. Erfindungsgemäß wird das mit einer Ausführung nach den kennzeichnenden Merkmalen des Patentanspruches 1 erreicht.

Nach weiteren Merkmalen der Erfindung können die die Rohrhülsen durchsetzenden Stellwellen an ihren unteren Enden fest mit den Traggestellen für die Laufräder verbunden sein oder die Traggestelle für die Laufräder können auf dem äußeren Durchmesser des unteren Endes der Rohrhülsen drehbar gelagert sein und mit den die Rohrhülsen durchsetzenden Stellwellen drehfest verbunden sein.

Die Stellhebel können entsprechend den Ansprüchen 4 bis 6 mittels verschiedener Verbindungsglieder mit den Stellwellen verbunden sein.

Nach Anspruch 7 sollen die Stellwellen auf ihrer ganzen oder einer teilweisen Länge in die mit einem Innengewinde versehenen Rohrhülsen eingeschraubt werden. Dadurch wird erreicht, daß die Stellwellen, die auch die Traggestelle für die Laufräder tragen, innerhalb der Rohrhülsen drehbar sind, bei Montage oder Demontage der Arbeitskreisel aber nicht nach unten herausfallen können.

Die weitgehend spielfreie Lagerung der Arbeitskreisel und ihrer Antriebselemente erlaubt es, entsprechend Anspruch 8 den Maschinenrahmen im Bereich der Arbeitskreisel lückenlos hohlzylinderförmig auszubilden und die rotierenden Teile der Arbeitskreisel mittels kreisringförmigen Dichtelementen dagegen abzudichten.

Die Erfindung wird anhand von 6 Abbildungen beispielsweise erläutert.
- Figur 1: zeigt einen Vertikalschnitt durch die Mittelebene eines Arbeitskreisels (teilweise),
- Figur 2: zeigt einen Horizontalschnitt in Richtung der Pfeile A - A (Fig. 1),
- Figur 3: zeigt einen Vertikalschnitt einer anderen Ausführungsform,

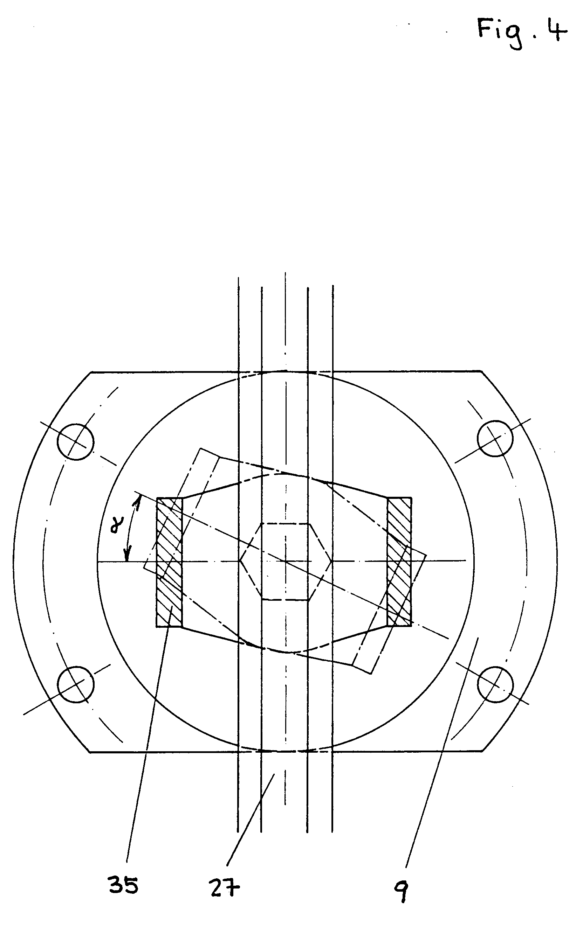

- Figur 4: zeigt einen Horizontalschnitt in Richtung der Pfeile B - B (Fig. 3),
- Figur 5: zeigt einen Vertikalschnitt einer weiteren Ausführungsform,
- Figur 6: zeigt einen Vertikalschnitt einer vierten Ausführungsform,

Ein Maschinenrahmen (1), der mehrere Arbeitskreisel trägt, erstreckt sich quer zur Fahrtrichtung einer bekannten und deshalb nicht dargestellten Kreiselheumaschine. Der Querschnitt des Maschinenrahmens (1) ist im Bereich der Arbeitskreisel etwa glockenförmig ausgestaltet und hat insbesonders im Bereich der Antriebselemente der Arbeitskreisel einen hohlzylinderförmigen, nach unten offenen Querschnitt mit Wänden (2). Im Inneren des Maschinenrahmens (1) befindet sich eine horizontale Anschraubfläche (3).

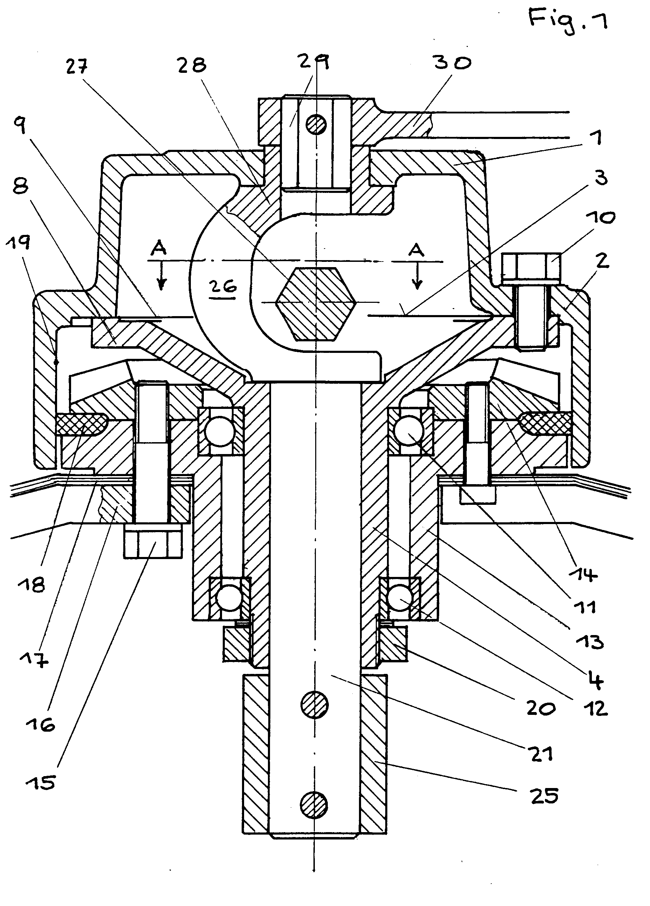

Eine Rohrhülse (4, 5, 6, 7) erweitert sich im oberen Bereich (8) trichterförmig und bildet am oberen Ende horizontale Flächen (9). Diese Flächen (9) sind mittels Schrauben (10) fest, aber lösbar mit den Anschraubflächen (3) des Maschinenrahmens (1) verbunden. Auf dem Außenumfang der Rohrhülsen (4, 5, 6, 7) sind in Wälzlagern (11, 12) Naben (13) und Antriebskegelräder (14) der Arbeitskreisel gelagert. Mit Schrauben (15) sind diese mit Zinkentragarmen (16) und einem diese abdeckenden Mantelblech (17) verbunden. Zwischen die Naben (13) und die Kegelräder (14) sind am Umfang kreisringförmige Weichdichtungen (18) eingelegt, die sich an die Innenwände (19) der hohlzylinderförmigen Wände (2) anlegen. Die Rohrhülsen (4, 6, 7) (Figuren 1, 5, 6) tragen an ihrem unteren Ende Schraubmuttern (20), mit denen die Naben (13) festgehalten werden.

Die Rohrhülsen (4, 5, 6, 7) werden von koaxialen Stellwellen (21, 22, 23, 24) durchsetzt, die dazu dienen, weiter unten beschriebene Traggestelle für Laufräder in ihrer Winkelstellung zu dem Maschinenrahmen (1) zu verstellen.

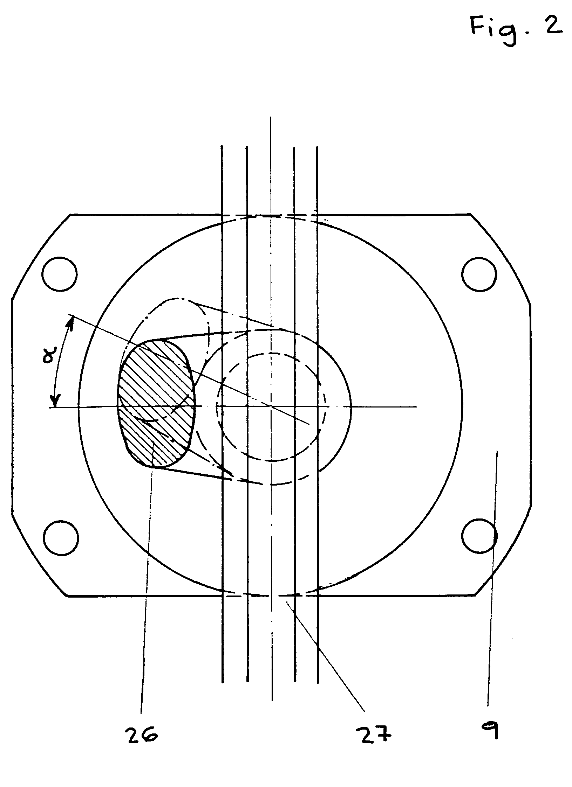

Nach Figur 1 ist die Stellwelle (21) zylindrisch und ist im unteren Bereich mit einem rohrförmigen Bauteil (25) verstiftet, das mit dem nicht dargestellten Fahrgestell für das Laufrad fest verbunden ist. Im oberen Bereich ist die Stellwelle (21) als Haken (26) ausgebildet, der eine 6-kantige Antriebswelle (27) mit Abstand umgreift und der darüber mittels eines zapfenförmigen Ansatzes (28) in einer Bohrung des Maschinenrahmens (1) gelagert ist. Ein 6-kantiger Stutzen (29) verbindet den Ansatz (28) drehfest mit einem außen liegenden Stellhebel (30). Der Haken (26) ist so ausgebildet, daß er eine Winkelbeweglichkeit +- α (Figur 2) zuläßt, die der gewünschten Verstellbarkeit für das Laufrad entspricht.

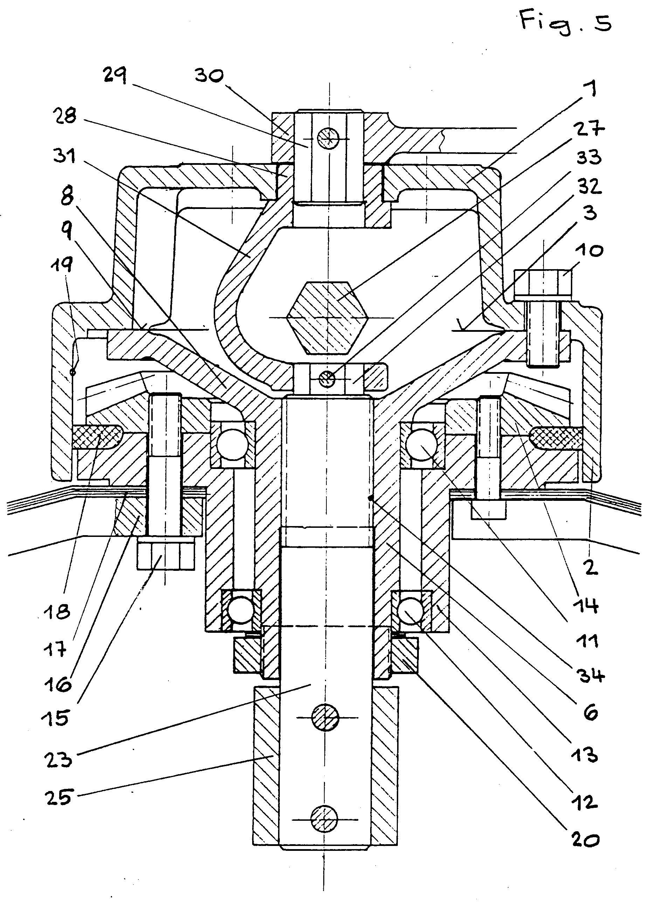

Bei der Ausführung nach Figur 5 ist die Stellwelle funktionell gleich aufgebaut wie bei der Ausführung nach Figur 1. Unterschiede bestehen darin, daß Stellwelle (23) und Haken (31) zweiteilig ausgeführt und über einen 6-Kant (32) und einen Stift (33) miteinander verbunden sind und daß die Stellwelle (23) im oberen Bereich mit einem Schraubgewinde (34) versehen ist, das mit einem Innengewinde in der Rohrhülse (6) drehbeweglich verschraubt ist.

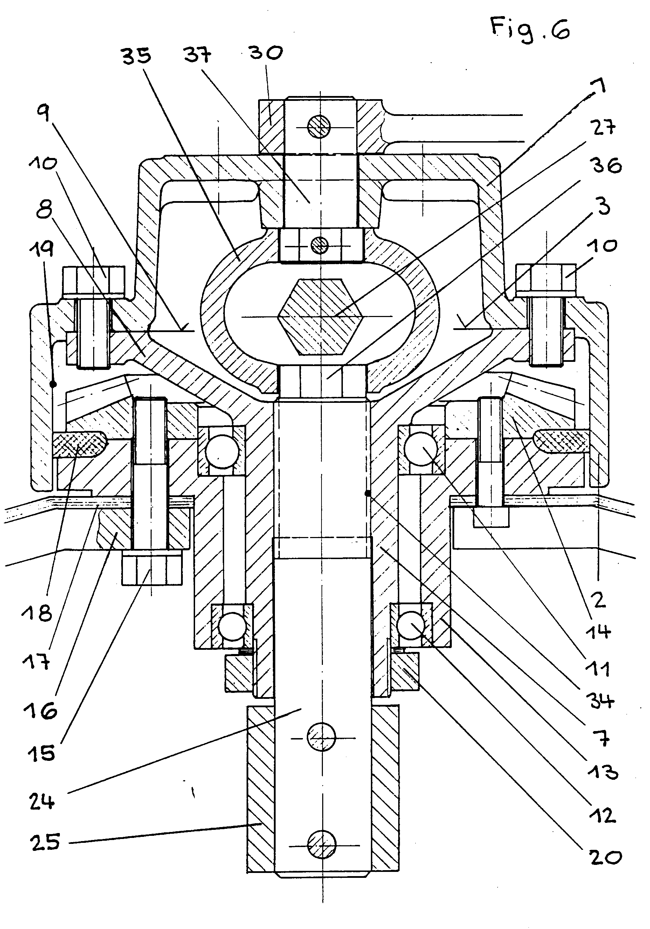

Die Ausführung nach Figur 6 ähnelt derjenigen nach Figur 5. Statt des Hakens (31) ist ein ringförmiges Verbindungsglied (35) vorgesehen, das über einen 6-Kant (36) mit der Stellwelle (24) verbunden ist. Das Verbindungsglied (35) ist über einen Zapfen (37) im Maschinenrahmen (1) gelagert und steht mit einem Stellhebel (30) in Wirkverbindung.

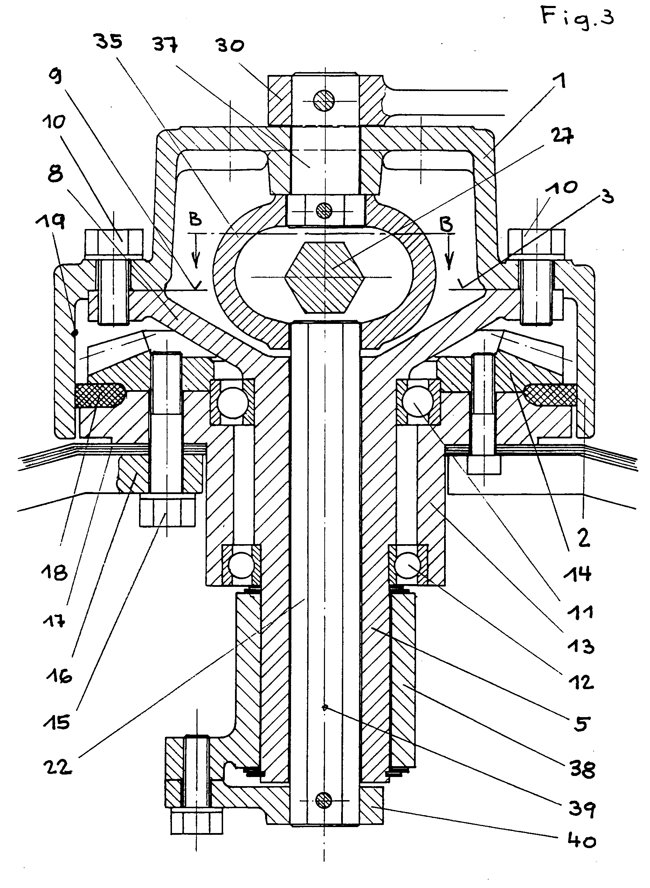

Die Ausführung nach Figur 3 ähnelt der nach Figur 6. Die Rohrhülse (5) ist hier nach unten verlängert. Auf der Verlängerung ist das Traggestell (38) für das Laufrad drehbar, aber axial unverschiebbar gelagert. Die Rohrhülse (5) wird von einem 6-kant-Stab (39) durchsetzt, der in ihrer zylindrischen Bohrung drehbar ist. Der 6-kant-Stab (39) steht mit einer Brille (40) in drehfester Verbindung, die ihrerseits mit dem Traggestell (38) verschraubt ist. Auch hier kann über Handhebel (30), Zapfen (37), Verbindungsglied (35) und 6-kant-Stab (39) das Traggestell (38) im Winkel verstellt werden.

## Patentansprüche

1. Kreiselheumaschine mit mehreren an einem Maschinenrahmen (1) lösbar befestigten Arbeitskreisen (16, 17), die gemeinsam von einer in Rahmenrichtung verlaufenden Antriebswelle (27) angetrieben werden und deren Laufräder um etwa senkrechte Achsen im Winkel verstellt werden können, wobei sowohl die Arbeitskreisel (16, 17) als auch die Traggestelle (25, 38) der Laufräder koaxial an mit dem Maschinenrahmen (1) verbundenen Tragzapfen (4, 5, 6, 7) gelagert sind, die als Rohrhülsen (4, 5, 6, 7) ausgebildet im oberen Bereich zu einem Trichter (8) oder zu trichterähnlichen Befestigungspratzen verbreitert sind, wobei an ihren äußerem Rohrdurchmesser die Arbeitskreisel (16, 17) drehbar gelagert sind und ihre inneren Rohrdurchmesser von einer Stellwelle (21, 22, 23, 24) durchsetzt werden, die eine Winkelverstellung der Laufräder bewirken kann, dadurch gekennzeichnet, daß die als Rohrhülsen ausgebildeten Tragzapfen (4, 5, 6, 7) über ihren Trichter (8) oder ihre Befestigungspratzen mit von außen zugänglichen Verbindungsmitteln wie Schrauben (10) mit dem Maschinenrahmen (1) lösbar verbunden sind und die sie durchsetzenden Stellwellen (21, 22, 23, 24) an ihren oberen Enden drehfest mit Stellhebeln (30) verbunden sind, die koaxial zu den Stellwellen (21, 22, 23, 24) oberhalb des Maschinenrahmens (1) gelagert sind, wobei Verbindungsglieder (26, 31, 35) zwischen den Stellwellen (21, 22, 23, 24) und den Stellhebeln (30) die Antriebswelle (27) für die Arbeitskreisel (16, 17) ganz oder teilweise umfassen.

2. Kreiselheumaschine nach Anspruch 1, dadurch gekennzeichnet, daß die die Rohrhülsen (4, 6, 7) durchsetzenden Stellwellen (21, 23, 24) an ihrem unteren Ende fest mit Bauteilen (25) der Traggestelle für die Laufräder verbunden sind.

3. Kreiselheumaschine nach Anspruch 1, dadurch gekennzeichnet, daß die Traggestelle (38) für die Laufräder auf dem äußeren Durchmesser der unteren Enden der Rohrhülsen (5) drehbar gelagert sind und daß sie mit den die Rohrhülsen (5) durchsetzenden Stellwellen (22) drehfest verbunden sind.

4. Kreiselheumaschine nach Anspruch 1, dadurch gekennzeichnet, daß die Verbindungsglieder (26, 31) hakenförmig ausgebildet und mit ihren oberen Enden (28) drehbeweglich in dem Maschinenrahmen (1) gelagert sind und mit ihren unteren Enden drehfest mit den Stellwellen (21, 23) verbunden sind.

5. Kreiselheumaschine nach Anspruch 1, dadurch gekennzeichnet, daß die Verbindungsglieder (35) ringförmig ausgebildet sind und die Antriebswelle (27) für die Arbeitskreisel (16, 17) mit Abstand ganz umgreifen und an ihrer Oberseite mittels eines zapfenförmigen Ansatzes (37) drehbar in dem Maschinenrahmen (1) gelagert sind und mit den Stellhebeln (30) drehfest verbunden sind, während sie an ihrer Unterseite drehfest, aber lösbar mit den Stellwellen (22, 24) verbunden sind.

6. Kreiselheumaschine nach Anspruch 4, dadurch gekennzeichnet, daß die hakenförmigen Verbindungsglieder (26) und die Stellwellen (21) einstückig sind.

7. Kreiselheumaschine nach den Ansprüchen 1 bis 6, dadurch gekennzeichnet, daß die die Rohrhülsen (6, 7) durchsetzenden Stellwellen (23, 24) in ihrer ganzen oder teilweisen Länge in die mit einem Innengewinde (34) versehenen Rohrhülsen (6, 7) eingeschraubt sind.

8. Kreiselheumaschine nach den Ansprüchen 1 bis 7, dadurch gekennzeichnet, daß der Maschinenrahmen (1) im Bereich der Arbeitskreisel (16, 17) lückenlos hohlzylinderförmig (2) ausgestaltet ist und um einen Tragzapfen rotierende Teile (13, 14) der Arbeitskreisel (16, 17) kreisringförmige Dichtelemente (18) aufweisen, die an ihrem Umfang die hohlzylinderförmigen Innenwände (19) des Maschinenrahmens (1, 2) ganz oder nahezu berühren und so eine Abdichtung zwischen den Innenräumen des Maschinenrahmens (1, 2) und den Arbeitskreiseln (16, 17) bewirken.

## Claims

1. A rotary hay making machine comprising a plurality of working rotors (16, 17) which are releasably secured to a machine frame (1) and which are jointly driven by a drive shaft (27) extending in the frame direction and the support wheels of which can be angularly adjusted about substantially perpendicular axes, wherein both the working rotors (16, 17) and also the support structures (25, 38) of the support wheels are mounted coaxially on trunnions (4, 5, 6, 7) which are connected to the machine frame (1) and which in the form of tubular sleeves (4, 5, 6, 7) are enlarged in the upper region to form a funnel (8) or funnel-like securing claws, wherein the working rotors (16, 17) are rotatably mounted at their outer tube diameter and their inner tube diameters have passing therethrough an adjusting shaft (21, 22, 23, 24) which can provide for angular adjustment of the support wheels, characterised in that the trunnions (4, 5, 6, 7) in the form of tubular sleeves are releasably connected by way of their funnels (8) or their securing claws to the machine frame (1) with connecting means which are accessible from the exterior such as screws (10) and the adjusting shafts (21, 22, 23, 24) which pass through them are non-rotatably connected at their upper ends to adjusting levers (30) which are mounted coaxially with respect to the adjusting shafts (21, 22, 23, 24) above the machine frame (1), wherein connecting members (26, 31, 35) between the adjusting shafts (21, 22, 23, 24) and the adjusting levers (30) entirely or partially embrace the drive shaft (27) for the working rotors (16, 17).

2. A rotary hay making machine according to claim 1 characterised in that the adjusting shafts (21, 23, 24) which pass through the tubular sleeves (4, 6, 7) are fixedly connected at their lower ends to components (25) of the support structures for the support wheels.

3. A rotary hay making machine according to claim 1 characterised in that the support structures (38) for the support wheels are rotatably mounted on the outer diameter of the lower ends of the tubular sleeves (5) and that they are non-rotatably connected to the adjusting shafts (22) which pass through the tubular sleeves (5).

4. A rotary hay making machine according to claim 1 characterised in that the connecting members (26, 31) are of a hook-shaped configuration and are rotatably mounted with their upper ends (28) in the machine frame (1) and are non-rotatably connected at their lower ends to the adjusting shafts (21, 23).

5. A rotary hay making machine according to claim 1 characterised in that the connecting members (35) are of an annular configuration and entirely embrace at a spacing the drive shaft (27) for the working rotors (16, 17) and are rotatably mounted at their top side in the machine frame (1) by means of a trunnion-like projection (37) and are non-rotatably connected to the adjusting levers (30) while at their underside they are non-rotatably but releasably connected to the adjusting shafts (22, 24).

6. A rotary hay making machine according to claim 4 characterised in that the hook-shaped connecting members (26) and the adjusting shafts (21) are integral.

7. A rotary hay making machine according to claims 1 to 6 characterised in that the adjusting shafts (23, 24) which pass through the tubular sleeves (6, 7) are screwed over the whole or part of their length into the tubular sleeves (6, 7) which are provided with a female screwthread (34).

8. A rotary hay making machine according to claims 1 to 7 characterised in that in the region of the working rotors (16, 17) the machine frame (1) is of a gap-less hollow-cylindrical shape (2) and parts (13, 14) of the working rotors (16, 17), that rotate about a trunnion, have sealing elements (18) in the form of a circular ring which at their periphery entirely or nearly contact the hollow-cylindrical inside walls (19) of the machine frame (1, 2) and thus provide sealing integrity between the internal spaces of the machine frame (1, 2) and the working rotors (16, 17).

## Revendications

1. Faneuse rotative équipée de plusieurs organes rotatifs de travail (16, 17) fixes amoviblement à un châssis (1) de la machine, conjointement menés par un arbre d'entraînement (27) s'étendant dans la direction du châssis, et dont les roues de roulement peuvent être réglées en inclinaison autour d'axes sensiblement verticaux, tant les organes rotatifs de travail (16, 17), que les bâtis de support (25, 38) des roues de roulement, étant montes coaxialement sur des tenons de support (4, 5, 6, 7) qui sont relies au châssis (1) de la machine, sont réalisés sous la forme de douilles tubulaires (4, 5, 6, 7) et sont élargis, dans la région supérieure, pour former un entonnoir (8) ou des pattes de fixation du type infundibuliforme, les organes rotatifs de travail (16, 17) étant montés à rotation sur leur diamètre tubulaire extérieur, et leurs diamètres tubulaires intérieurs étant traversés par un arbre de réglage (21, 22, 23, 24) pouvant provoquer un déplacement angulaire des roues de roulement, caractérisée par le fait que les tenons de support (4, 5, 6, 7), réalisés sous la forme de douilles tubulaires, sont reliés amoviblement au châssis (1) de la machine par l'intermédiaire de leur entonnoir (8) ou de leurs pattes de fixation, à l'aide de moyens de solidarisation accessibles de l'extérieur, tels que des vis (10), et les arbres de réglage (21, 22, 23, 24) traversant lesdits tenons sont verrouillés en rotation, par leurs extrémités supérieures, à des leviers de réglage (30) montés au-dessus du châssis (1) de la machine, coaxialement aux arbres de réglage (21, 22, 23, 24), des pièces de liaison (26, 31, 35), placées entre les arbres de réglage (21, 22, 23, 24) et les leviers de réglage (30), entourant intégralement ou partiellement l'arbre (27) d'entraînement des organes rotatifs de travail (16, 17).

2. Faneuse rotative selon la revendication 1, caractérisée par le fait que les arbres de réglage (21, 23, 24) traversant les douilles tubulaires (4, 6, 7) sont reliés rigidement, par leur extrémité inférieure, à des pièces structurelles (25) des bâtis de support affectés aux roues de roulement.

3. Faneuse rotative selon la revendication 1, caractérisée par le fait que les bâtis de support (38) affectés aux roues de roulement sont montés, à rotation, sur le diamètre extérieur des extrémités inférieures des douilles tubulaires (5) ; et par le fait qu'ils sont verrouillés en rotation aux arbres de réglage (22) traversant les douilles tubulaires (5).

4. Faneuse rotative selon la revendication 1, caractérisée par le fait que les pièces de liaison (26, 31) sont réalisées en forme de crochets, sont montées à rotation dans le châssis (1) de la machine, par leurs extrémités supérieures (28), et sont verrouillées en rotation aux arbres de réglage (21, 23), par leurs extrémités inférieures.

5. Faneuse rotative selon la revendication 1, caractérisée par le fait que les pièces de liaison (35) sont de réalisation annulaire, ceinturent intégralement à distance l'arbre (27) d'entraînement des organes rotatifs de travail (16, 17), et sont montées rotatives dans le châssis (1) de la machine à leur face supérieure, au moyen d'un appendice (37) en forme de tenon, en étant verrouillées en rotation aux leviers de réglage (30), tandis qu'elles sont reliées aux arbres de réglage (22, 24), à leur face inférieure, avec verrouillage en rotation, mais de manière libérable.

6. Faneuse rotative selon la revendication 4, caractérisée par le fait que les pièces de liaison (26) en forme de crochets et les arbres de réglage (21) constituent un seul tenant.

7. Faneuse rotative selon les revendications 1 à 6, caractérisée par le fait que les arbres de réglage (23, 24) traversant les douilles tubulaires (6, 7) sont vissés, par la totalité ou une partie de leur longueur, dans les douilles tubulaires (6, 7) pourvues d'un filetage intérieur (34).

8. Faneuse rotative selon les revendications 1 à 7, caractérisée par le fait que le châssis (1) de la machine est de configuration cylindrique creuse (2) sans discontinuités, dans la région des organes rotatifs de travail (16, 17), et des parties (13, 14) desdits organes rotatifs de travail (16, 17), tournant autour d'un tenon de support, présentent des éléments d'étanchement (18) en forme d'anneaux circulaires qui sont intégralement ou approximativement en contact, par leur pourtour, avec les parois intérieures cylindriques creuses (19) du châssis (1, 2) de la machine, et assurent ainsi une étanchéité entre les espaces internes du châssis (1, 2) de la machine, et les organes rotatifs de travail (16, 17).
